# EUROPEAN PATENT APPLICATION

(11) **EP 4 415 228 A1**
(43) Date of publication of application: **14.08.2024**
(21) Application number: 23156380.0
(22) Date of filing: 13.02.2023
(51) Int. Cl.: H02K 1/278

(54) **A MAGNET FOR A SURFACE PERMANENT MAGNET MACHINE**

(71) Applicant: Hamilton Sundstrand Corporation, Charlotte, NC 28217 (US)
(72) Inventor: SANGHA, Parminder, Solihull (GB); DURAIRAJ, Thilak Raj, Shirley, Solihull (GB)
(74) Representative: Dehns

(57) **Abstract**

A magnet for a surface permanent magnet machine is provided. The magnet comprises a magnet body having a first surface, wherein the first surface comprises an inner part and an outer part, wherein the outer part is axially outwards of the inner part in use. The first surface comprises a plurality of slits, wherein a density of the slits is greater at the outer part than at the inner part. Also provided is a surface permanent magnet machine comprising at least one of the magnets, a surface permanent magnet motor comprising at least one of the magnets and an aircraft comprising the surface permanent magnet machine.

## Description

### Technical Field

This disclosure relates to a magnet for a surface permanent magnet machine and a surface permanent magnet machine comprising the magnet.

### Background

Surface permanent magnet motors use permanent magnets affixed to a rotor shaft to generate magnetic flux. Such motors may operate at higher fundamental electrical frequency (high speed and/or larger number of poles) and higher electric and magnet loadings which allows motors to be designed that are more compact but have the same performance. Using motors that have higher efficiency, but lower size and weights are particularly important in, for example, in aircraft and automotive applications.

During operation of surface permanent magnet motors, eddy currents are induced in the permanent magnets. The eddy currents are generated as the rotor magnets rotate past the stator slot openings and as lower/higher than fundamental frequency harmonics in the stator currents rotate past the rotor magnets. The harmonics in the air gap are also affected by the length of the magnetic air gap and by the induced saturation of the stator core due to the stator currents. Eddy current losses are much harder to remove from a rotating component and hence it is preferable to reduce these to a minimum.

The stator of a typical motor is constructed from laminations to reduce eddy current losses in the stator. It is known to reduce eddy current losses in permanent magnets of permanent magnet machines by segmenting the magnets in an axial and a circumferential direction. Typically, the magnetic material is cut into segmented pieces which are then glued together and assembled into blocks of magnets, sometimes with insulation between segmented pieces as well as layers of glue. The blocks are assembled on a rotor shaft of a surface permanent magnet machine.

However, this process is time consuming, difficult to assemble, wastes magnet material and increases the cost of the rotor assembly. The segmented magnet blocks may also be less mechanically robust when they have been cut and re-assembled.

A magnet which is arranged to reduce the eddy current loss of the permanent magnet and improve the efficiency of the permanent magnet motor is provided.

### Summary

According to a first aspect, there is provided a magnet for a surface permanent magnet motor, the magnet comprising:
a magnet body having a first surface, wherein the first surface comprises an inner part and an outer part, wherein the outer part is axially outwards of the inner part in use,
wherein the first surface comprises a plurality of slits,
wherein a density of the slits is greater at the outer part than at the inner part.

By providing slits on a first surface of the magnet body of the magnet, eddy current losses may be reduced. In use, stator flux may peak at the outer part of the magnet body meaning that more eddy currents may be present at the outer part. It is therefore beneficial to have a greater density of slits in the outer part than in the inner part to make it more difficult for the increased eddy currents to flow in the outer part. This means that eddy current losses are reduced suitably where more eddy currents are present. The number of circumferential and/or axial segments required is a compromise between higher manufacturing costs associated with segmentation and acceptable temperature rise arising from magnet losses. Typically, more axial segments than circumferential segments are utilised for ease of current manufacturing methods.

The first surface may be an in use radially outer surface.

The inner part may cover an axial mid-point of the magnet body.

The outer part may be closer to the in-use axial end of the magnet body.

The outer part may comprise two parts on opposing sides of the inner part.

The first surface may comprise slits that extend in the circumferential direction.

The slits may be spaced along the in-use axial length of the magnet.

The spacing between the slits at the outer part of the first surface may be smaller than the spacing between the slits at the inner part of the first surface.

The spacing between the slits may be in the region of 1mm to 2mm for some high frequency applications.

The first surface may comprise slits that extend in the axial direction.

At least some of the slits that extend in the axial direction may extend only in the outer part of the first surface.

The magnet body may comprise a second surface arranged opposite to the first surface.

The second surface may comprise a plurality of second surface slits.

The second surface slits may extend in the circumferential direction.

The second surface slits may extend in the axial direction.

The first surfaces may comprise more slits than the second surface.

The slits and/or secondary surface slits may extend at an angle in the first and/or second surface.

Each of the slits may be between 20 to 200µm wide depending on the manufacturing process utilised.

Each of the slits may extend less than 50% into the radial depth D₁ of the magnet body.

Each of the slits the slits may extend less than 90%, less than 80%, less than 70%, less than 60%, less than 40%, less than 30%, less than 20%, or less than 10% into the radial depth D₁ of the magnet body.

Each of the slits may extend through more than 90% but less than 100% of the radial depth D₁.

Different slits may extend different depths into the radial depth D₁ of the magnet body.

The secondary surface slits may be offset from the slits in the first surface.

The slits may be provided as straight lines.

The slits may be provided as arc-shaped lines.

The slits may be provided as wavy lines.

The slits may be provided as v-shaped lines.

At least some the slits may be filled with an insulating and /or non-conducting material.

The insulating and/or non-conducting material may be epoxy.

According to a second aspect, there is provided a surface permanent magnet motor comprising at least one of the magnets of the first aspect.

According to a third aspect, there is provided surface permanent magnet machine comprising at least one of the magnets of the second aspect.

The surface permanent magnet machine may be a motor.

The surface permanent magnet machine may be a generator.

The surface permanent magnet machine may be a motor-generator.

According to a fourth aspect, there is provided an aircraft comprising the surface permanent magnet machine.

According to a fifth aspect, there is provided an automotive vehicle comprising the surface permanent magnet machine.

### Brief Description of the Drawings

Various examples will now be described, by way of example only, and with reference to the accompanying drawings, in which:
Fig. 1 shows a cross section of a typical surface permanent magnet motor arrangement with distributed windings;
Fig. 2 shows a cross section of a typical surface permanent magnet motor arrangement with concentrated windings;
Fig. 3 shows a perspective view of a magnet;
Fig. 4 shows a perspective view of a magnet;
Fig. 5 shows a perspective view of a magnet;
Fig. 6 shows a perspective view of a magnet;
Fig. 7 shows a perspective view of a magnet arrangement;
Fig. 8 shows a perspective view of a magnet; and
Fig. 9 shows a perspective view of a magnet.

### Detailed Description

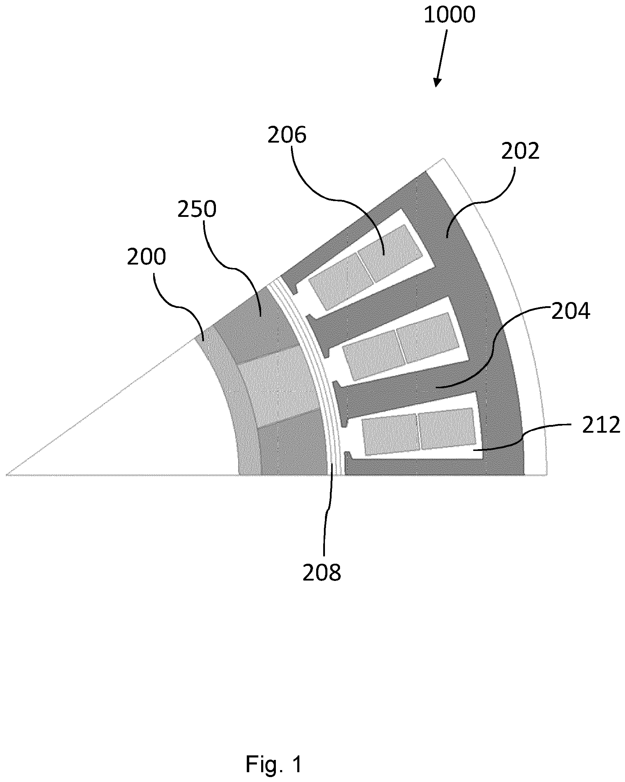

Referring to Fig. 1, a cross section of a typical surface permanent magnet machine arrangement 1000 with distributed stator windings 206 is shown. In Fig. 1, part of the machine arrangement is shown which illustrates one magnetic pole. In examples, the surface permanent magnet machine 1000 is a surface permanent magnet motor. In this example the stator contains integer slot/pole/phase, it is also possible to apply the technique to machines with fractional slot/pole/phase.

The permanent magnet machine arrangement 1000 comprises a rotor shaft 200. The rotor shaft is arranged to rotate relative to a stator 202.

A plurality of surface permanent magnets 250 are attached to the outer circumference of the rotor shaft 200. The magnets 250 are held in position with a retaining sleeve 208. The retaining sleeve 208 may be a composite sleeve. In examples, the retaining sleeve is provided in addition to securing means that directly secure the magnets 250 to the rotor shaft 200. In examples, the retaining sleeve 208 may be omitted and the magnets may be attached to the circumference of the rotor shaft 200 with securing means. The securing means may be adhesive. In most applications, the sleeve is required for safety and reliability reasons depending on the design and operating environment.

The magnets 250 are grouped in groups of three magnets 250 which form a pole. More magnets per pole to form each pole may be provided which could decrease the resultant eddy currents generated in the magnets during operation. A plurality of magnetic poles are provided around the outer circumference of the rotor shaft 200 such that the magnetic poles form an annulus around the outer circumference of the rotor shaft 200.

The arrangement 1000 comprises a stator 202 which forms a housing and is the stationary part of the rotary system. The stator 202 is formed of iron. The stator 202 may also be formed of a different ferromagnetic metal. The stator 202 comprises a number of stator teeth 204 which extend towards the rotor shaft 200. Between the teeth 204 are stator slots 212.

The stator windings 206 are distributed to wrap around one or more stator teeth 204. A rotating field is generated by the stator windings 206. The rotating field induces eddy currents in the rotor magnets 250.

In examples, the surface permanent magnet machine may be a surface permanent magnet generator. In examples, the surface permanent magnet machine may be a surface permanent magnet motor-generator.

The rotor shaft 200 may be covered with a carbon fibre or metallic sleeve (not shown) to safely retain the magnets in position for mechanical integrity under operating conditions.

The surface permanent magnet machine may be used in aircraft or automotive applications where efficiency and size of the machine is particularly important.

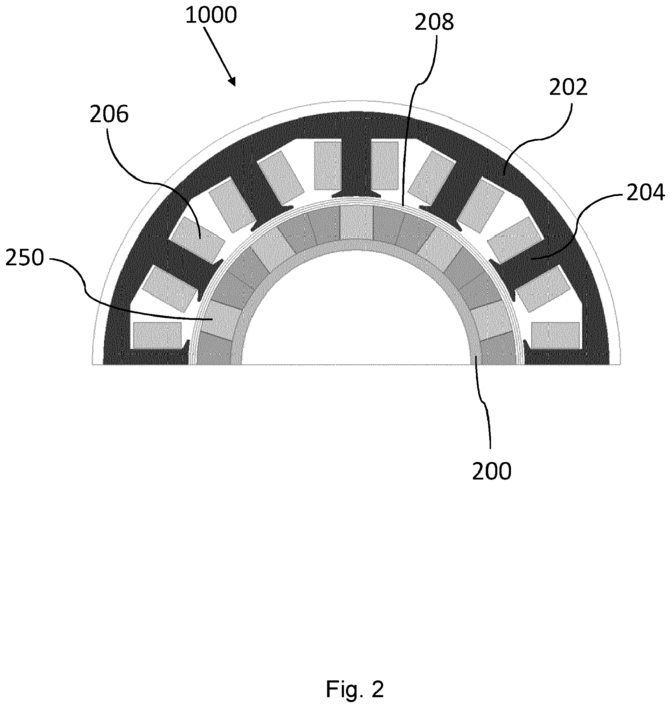

Referring to Fig. 2, a cross section of a typical surface permanent magnet motor arrangement 1000 with concentrated stator windings 206 is shown. The motor shown in Fig. 2 operates in substantially the same way as the motor shown in Fig. 1, except the windings 206 are concentrated around each stator tooth 204. Concentrated wound machines can also be constructed with different slot and pole combinations.

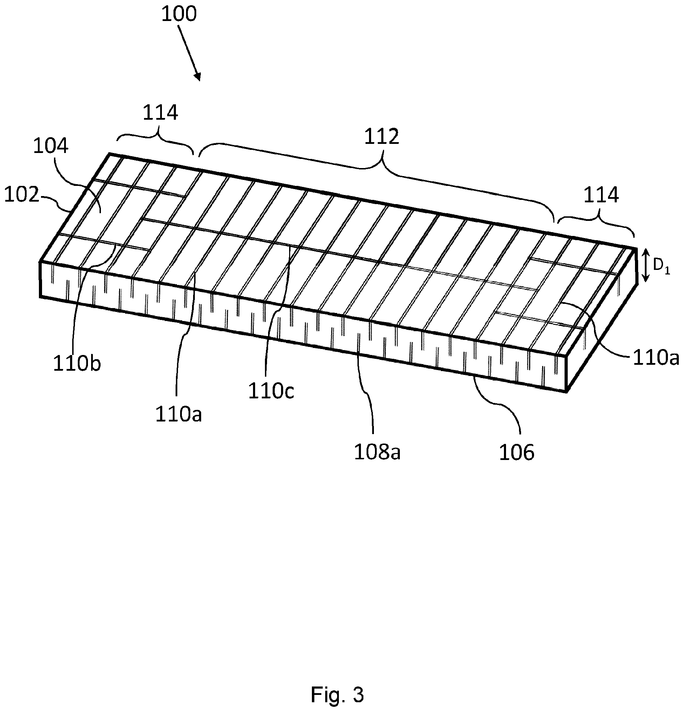

With reference to Fig. 3, a magnet 100 in accordance with a first example of the invention is shown. The magnet 100 is suitable for use in a surface permanent magnet motor 1000 of the type shown in Fig. 1 and Fig. 2.

The magnet 100 comprises a magnet body 102. The magnet body 102 may be made of steel. In examples, the magnet body 102 is made of a different ferromagnetic material. The magnet body 102 has an axially inner part 112 and two axially outer parts 114 along its in-use axial length. The axial direction is parallel to a rotation axis of the rotor. In use, the outer parts 114 are axially outwards of the inner part. This means that the outer parts 114 are closer to the in-use axial ends of the magnet body 102. The inner part 114 covers an in-use axial midpoint of the magnet body 102. The axially outer parts 114 are located on opposing sides of the inner part 112.

The magnet body 102 has a first surface 104 and a second surface 106. The magnet body 102 is a cuboid. First and second surfaces are substantially rectangular and on opposing sides of the magnet body 102. In examples, the magnet body follows the arc of the rotor rather than being cuboidal. The surfaces 104 and 106 may be circular. Second surface 106 may have facets to locate the magnets on to the rotor shaft 200.

The first surface 104 is an in-use radially outer surface. In use, the first surface 104 faces the stator 202. In use, the second surface 106 faces the rotor shaft 200.

The first surface 104 comprises a plurality of slits 110a, 110b, 110c.

The slits described herein are channels that extend into, but not the whole way through, the radial depth D₁ of the magnet body 102. For example, the slits may extend into the magnet body 102 less than 50% of the radial depth D₁. In examples, the slits may extend less than 90%, less than 80%, less than 70%, less than 60%, less than 40%, less than 30%, less than 20%, or less than 10% into the radial depth D₁. In examples, the slits may extend through more than 90% but less than 100% of the radial depth D₁. Different slits may extend different depths into the radial depth D₁ of the magnet body 102.

For convenience of machining, the slits may be provided as a straight line. The slits may also be provided as an arc shaped line or V-shaped line, wave shaped line. Other configurations of the slits are also envisaged.

A plurality of first slits 110a are provided in the first surface 104 which are spaced along the in-use axial length of the magnet body 102. The first slits 110a extend in the circumferential direction along the whole circumferential width of the magnet body 102. The circumferential directions is an in-use circumferential direction and is circumferential with respect to the rotational axis of the rotor.

The number of axial slits required will vary from one application to another. For some higher fundamental frequency applications, axial segment thickness of 1-2mm may be desired, whereas for lower fundamental frequency applications much thicker segments will be acceptable. The frequency of the AC supply in the traditional aircraft is 400Hz for constant frequency systems. In context of the higher frequency mentioned in this disclosure, the frequency may be typically 1000 - 2000 Hz, depending on the application. For small machines, 2-3 circumferential segments per pole may be sufficient to provide adequate quality for the air gap flux density. The optimum number of slits may be defined with the aid of detailed electromagnetic model based on analytic or finite element analysis.

Second slits 110b and third slits 110c are provided in the first surface 104 which extend axially along the axial length of the magnet body 102. An axial third slit 110c is provided in the inner part 112 of the magnet body 102, which extends part way along the axial length of the magnet body 102 and not into the outer parts 114. In examples, the third slit 110c does extend along the full axial length.

Two axial second slits 110b are provided in the outer parts 114 of the magnet body 102. There is an increased density of slits 110a, 110b at the in use axial outer parts 114 than at the inner part 112 of the magnet body 102.

In use, stator flux peaks at the outer parts 114, meaning that more eddy currents may be present at the in-use axial ends of the magnet body 102. It is there beneficial to have more slits 110a, 110b in the outer parts 114 to make it more difficult for eddy currents to flow in these regions.

The number of slits 110a, 110b, 110c provided on the first surface 104 is dependent on the total axial length and circumferential width of the magnet body 102. The number of slits 110a, 110b, 110c may also be dependent on the operating frequency of the machine and the machine topology.

The slits 110a, 110b, 110c may have varying depths, depending on the requirements of the magnet 100.

The second surface 106 comprises a plurality of second surface slits 108a which are spaced along the in-use axial length of the magnet body 102. The second surface slits 108a extend circumferentially across the width of the magnet body 102 in the circumferential direction. The second surface slits 108a extend into, but not the whole way through, the radial depth D₁ of the magnet body 102, as described above for slits 110a, 110b, 110c in the first surface. The second surface slits 108a are offset from slits 110a such that the slits do not create a cut through the whole depth D₁ of the magnet body 102.

Further second surface slits may be provided in the second surface 106 which may extend axially along the axial length of the magnet body 102.

Fewer second surface slits may be required in the second surface 106 than in the first surface 104 because, in use, there may be reduced eddy current effects as radial depth towards the rotor shaft increases.

Each of the slits are machined into the magnet body 102 by wire erosion, laser cutting, plasma cutting, gas cutting or other machining processes.

In examples, the slits may be approximately 0.2mm wide. Depending on the manufacturing process utilised, the width of the slits may be less wide than 0.2mm or more wide than 0.2mm. The slits may be between 20 to 200µm wide depending on the manufacturing process utilised. Having slits of such widths sufficiently disrupts the eddy current effects while minimising the loss of magnetic material during manufacture so that motor performance is not impacted.

In examples, some or all of the slits may be filled with epoxy or other non-conducting and/or insulating materials. This will reduce eddy current losses and also increase the mechanical rigidity of the magnet body 102.

In examples, the slits may be spaced 1-2mm apart from adjacent slits for high frequency applications This will ensure that eddy current losses are improved while maintaining sufficient mechanical rigidity of the magnet body 102 and simplifying manufacture. In embodiments, the slits may be spaced less than 1mm apart from adjacent slits. In embodiments, the slits may be spaced more than 2mm apart from adjacent slits.

In examples, the slits may not extend along the whole axial length or circumferential width of the magnet body. For example, slits may be present only in the outer parts of the magnet body where eddy currents may have the greatest effect.

The magnet 100 is arranged to be used in place of magnets 250 shown in Fig. 1 or Fig. 2. In use when the magnet 100 is arranged as part of the motor 1000, the provided slits make it difficult for eddy currents to flow in the magnet 100. This means that the motor is more efficient.

Manufacture of the magnets 100 is also simplified as compared to existing segmentation methods which cut the magnetic material into pieces and glue them back together. Since the slits do not extend through the whole depth of the magnet body 102, reliability and mechanical robustness of the magnets is also improved.

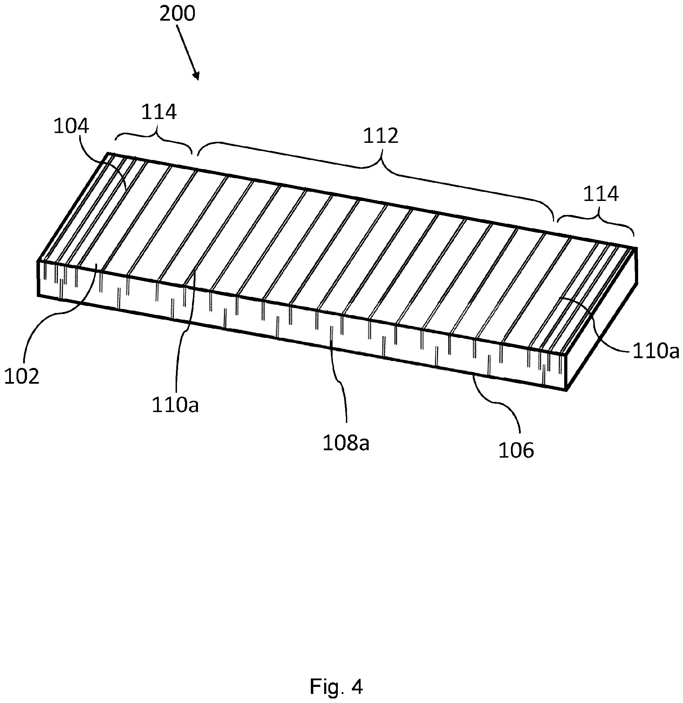

Referring to Fig. 4, a magnet 200 in accordance with a further example of the invention is shown.

The magnet 200 is substantially identical to the magnet 100 of Fig. 3. Magnet 200 has a magnet body 102 with an axially inner part 112 and two axially outer parts 114. The magnet body 102 has a first surface 104 and a second surface 106.

The first surface 104 comprises a plurality of circumferential first slits 110a that extend circumferentially along the whole circumferential width of the magnet body 102.

The first surface 104 does not comprise any further slits that extend axially along the axial length of the magnet body 102. Instead, more circumferential first slits 110a are provided at outer parts 114. The spacing of the first slits 110a at the outer parts 114 is less than the spacing of the first slits 110a at the inner part 112. There is an increased density of first slits 110a at the in use axial outer parts 114 than at inner part 112 of the magnet body 102.

Additionally, fewer second surface slits 108a are provided on the second surface 106. In examples, it may not be necessary to install as many second surface slits 108a on the second surface 106 as on the first surface 104 as there may be reduced eddy current effects the as radial depth increases.

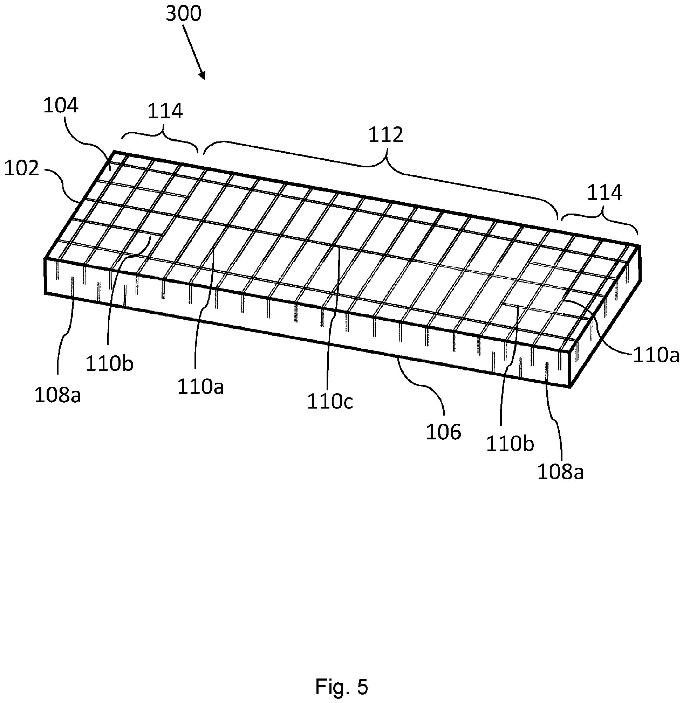

Referring to Fig. 5, a magnet 300 in accordance with a further example of the invention is shown.

The magnet 300 is substantially identical to the magnets 100 and 200 of Fig. 3 and Fig.4 respectively. Magnet 300 has a magnet body 102 with an axially inner part 112 and two axially outer parts 114. The magnet body 102 has a first surface 104 and a second surface 106.

The magnet 300 has a plurality of first slits 110a which are provided in the first surface 104. The first slits 110a are spaced substantially evenly along the axial length of the magnet body 102. The first slits 110a extend circumferentially along the whole circumferential width of the magnet body 102.

A number of second slits 110b and third slits 110c are provided in the first surface 104.

At least one third slit 110c extends axially along the full axial length of the magnet body 102. Second slits 110b are provided in the outer parts 114 of the magnet body 102, which extend axially along only the axial length of the outer parts 114.

This means that there are more slits 110a, 110b, 110c in the outer parts 114 of the magnet body 102, as compared to the number of slits 110a, 110c in the inner part 112 of the magnet body 102. In use, since more eddy currents may flow in the outer parts 114 of the magnet body, having this greater density of slits in the outer part is beneficial to increase efficiency.

First slits 110a may intersect with second slits 110b and third 110c. This has the effect of dividing the surface 104 into different sections which is beneficial to reducing eddy current losses.

Second surface slits 108a are provided on the second surface 106 of the magnet body 102. The second surface slits 108a extend circumferentially along the circumferential width of the magnet body. The second surface slits 108 are provided only in the outer part 114 of the second surface 106 of the magnet body 102. In use, reduced eddy currents are present in the inner part 112 of the second surface 106 and so in examples it is not necessary to provide slits in this part. This may also reduce manufacturing complexity and costs.

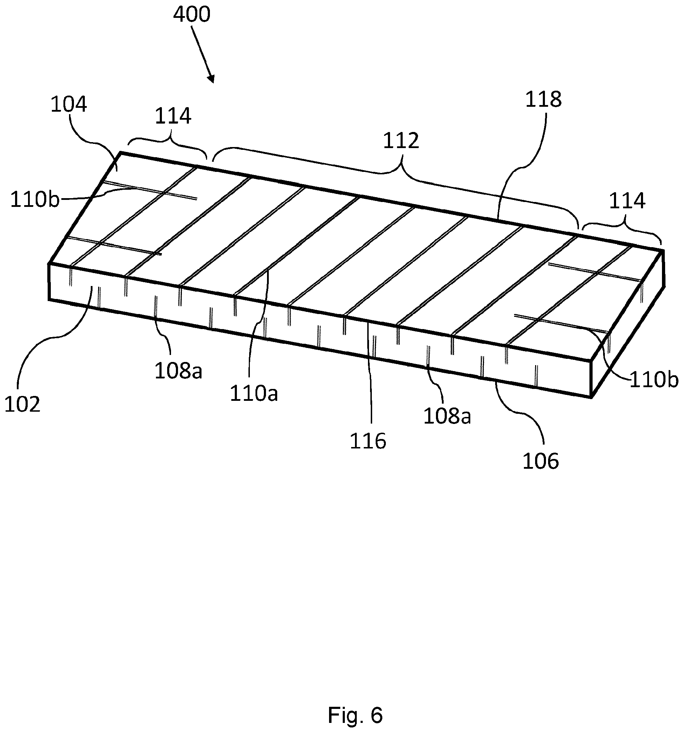

Referring to Fig. 6, a magnet 400 in accordance with a further example of the invention is shown.

The magnet 200 is substantially identical to the magnet 100 of Fig. 3. Magnet 400 has a magnet body 102 with an axially inner part 112 and two axially outer parts 114. The magnet body 102 has a first surface 104 and a second surface 106.

The first surface 104 comprises a plurality of first slits 110a that extend across the circumferential width of the magnet body 102 at an angle to the axial direction. The first slits 110a extend from a first edge 116 of the magnet body 102 to a second edge 118. First edge 116 and second edge 118 are circumferentially opposing edges of the magnet body 102.

The first slits 110a are spaced evenly along the axial length of the magnet body 102. Each first slit 110a is substantially parallel to its adjacent first slit 110a. Slanted slits (i.e. those angled relative to the axial direction) may avoid the need for having slits extending in two perpendicular direction, since the slanted slits interrupt both circumferential and axial eddy current flow. This may simplify the machining process for the slits during manufacture of the magnet.

Second slits 110b are provided in the first surface 104. Second slits 110b extend axially part way along the axial length of the magnet body 102. The second slits 110b extend along the outer parts 114 of the axial body 102 only.

In examples, more angled first slits 110a may be provided in the outer part 114 of the magnet body 102. This will increase the density of slits in the outer part in order to reduce eddy current losses. Extra slits may be provided that extend parallel to the first slits 110a. Alternatively or additionally, further slits may be provided in the first surface 104 which intersect the angled slits.

The second surface 106 of the magnet body 102 also comprises a plurality of second surface slits 108a. The second surface slits 108 extend from first edge 116 to second edge 118 at an angle in the same manner as for slits 110a. The second surface slits 108a may be offset from first surface slits 110a.

In examples, second surface slits may be provided that axially along the axial length of the magnet body 102. The second surface slits may extend in the outer parts 114 of the magnet body 102 only such that there is a greater density of slits in the outer part 114 of the magnet body 102. In examples, further circumferential second surface slits may be provided on the second surface 106.

In examples, slits 110b and/or any circumferential second surface slits may extend along the full axial length of the magnet body 102, provided there is a greater density of slits in the outer parts 114 of the magnet body 102 compared to the inner part 112 of the magnet body 102. This has the effect of reducing eddy currents which may be greater in the outer parts 114.

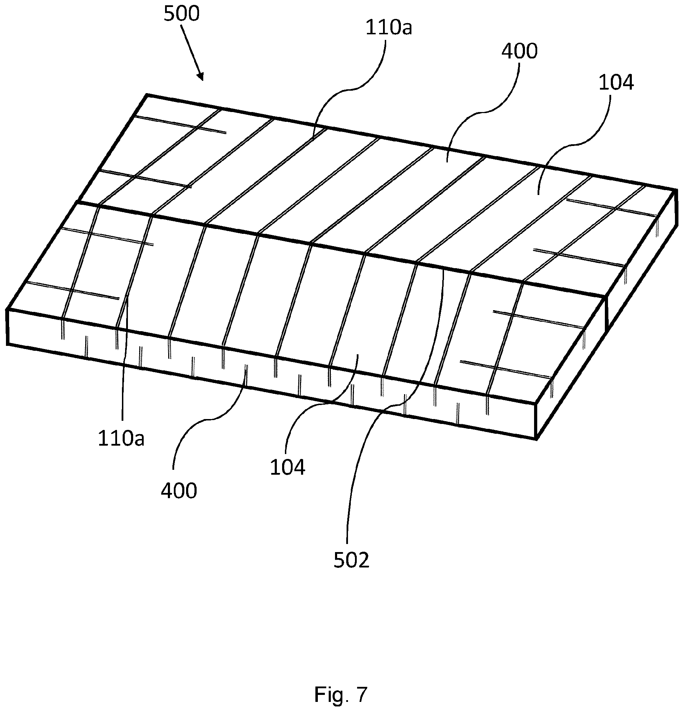

Referring to Fig. 7, a composite magnet arrangement 500 is shown. The magnet arrangement 500 comprises two magnets 400 that are joined together along their axial lengths. The magnets 400 may be joined together with adhesive or other suitable securing means along join 502 The magnets 400 are identical to those shown and described in Fig. 6.

In the magnet arrangement 500, the two magnets 400 that are joined along their axial lengths each comprise a plurality of first slits 110a in their respective first surfaces 104 that extend across the circumferential width of the firsts surfaces 104 at an angle to the axial direction. The angled first slits 110a in each magnet 400 are mirror images of the opposing magnet. As a result, the slits 110a across the whole first surface of the magnet arrangement 500 are arranges as v-shaped slits. The vertex of each v-shaped slit is arranged at join 502.

In the magnet arrangement 500, a Halbach magnet array is formed that is made from two or more magnet circumferential segments per pole. In examples, more than two magnets may be joined together. Halbach magnet arrangements are used to increase magnitude and quality of the air gap flux density particularly when the air gap is relatively large. As the number of circumferential segments per pole increases, the quality of the air flux density improves but this increases manufacturing costs. Each of the magnet segments in the pole will be appropriately magnetised to obtain the required air gap flux density pattern.

In examples, any arrangement of magnets disclosed in the examples may be combined to for a required pole.

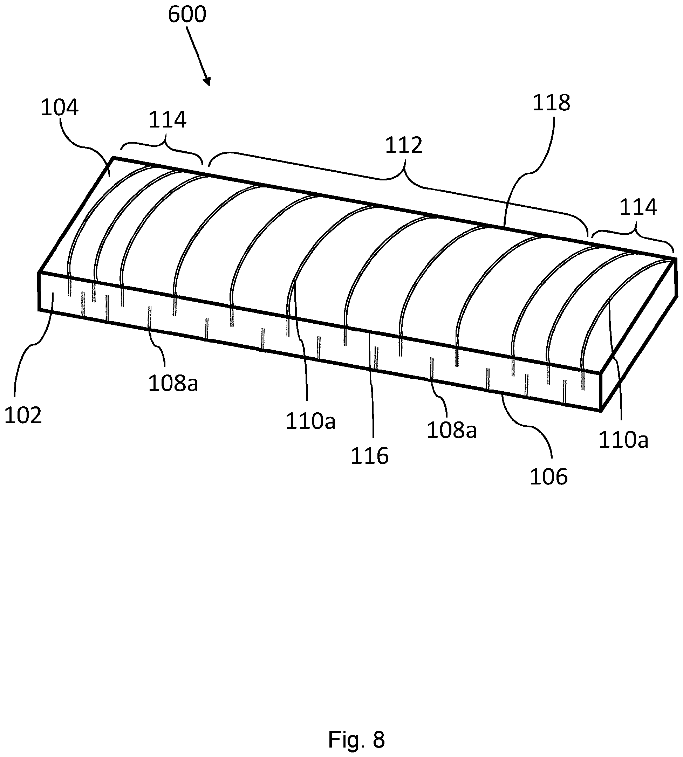

Referring to Fig. 8, a magnet 600 in accordance with a further example of the invention is shown.

The magnet 200 is substantially identical to the magnet 400 of Fig. 6. Magnet 600 has a magnet body 102 with an axially inner part 112 and two axially outer parts 114. The magnet body 102 has a first surface 104 and a second surface 106.

The first surface 104 comprises a plurality of first slits 110a that extend across the circumferential width of the magnet body 102. The first slits 110a are each a circular arc in the axial direction and are symmetrical about the axis X that along the in-use axial length of the magnet body 102.

The first slits 110a extend from a first edge 116 of the magnet body 102 to a second edge 118. First edge 116 and second edge 118 are circumferentially opposing edges of the magnet body 102. The midpoint of each first slit 110a extends further in the axial direction than the circumferential outer parts of the slits 110a that are located proximal the first edge 116 and the second edge 118.

The first slits 110a are spaced evenly along the axial length of the magnet body 102 in the axially inner part 112. In the two axially outer parts 114, the first slits 110a are spaced closer together than in the axially inner part 112, such that the density of slits in the axially outer parts 114 is greater.

The second surface 106 of the magnet body 102 also comprises a plurality of second surface slits 108a. The second surface slits 108 are curved in the same manner as for slits 110a. The second surface slits 108a may be offset from first surface slits 110a.

The curved slits 110a, 108a disrupt eddy currents in both the circumferential and axial directions. This means that further axial slits may not be required. This may simplify the machining process for the slits during manufacture of the magnet and increases the amount of magnetic material present. This may also increase mechanical integrity of the magnet body 102.

In examples, the curved slits 110a, 108a may be replaced by v-shaped slits that extend across the circumferential width of the magnet body 108.

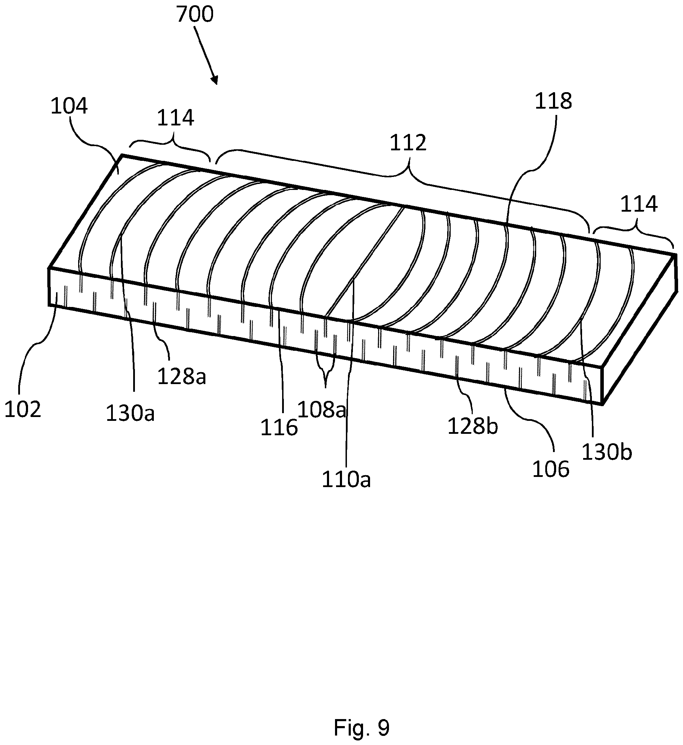

Referring to Figure 9, a magnet 700 in accordance with a further example of the invention is shown.

The magnet 200 is substantially identical to the magnet 400 of Fig. 7. Magnet 700 has a magnet body 102 with an axially inner part 112 and two axially outer parts 114. The magnet body 102 has a first surface 104 and a second surface 106. The magnet body 102 comprises a first edge 116 and second edge 118 which are are circumferentially opposing edges of the magnet body 102.

The first surface 104 comprises a plurality of slits 110a, 130a, 130b. The slits 110a extend from a first edge 116 of the magnet body 102 to a second edge 118.

In particular, the first surface 104 comprises a first slit 110a which is straight and extends across the circumferential width of the magnet body 102. The first surface 104 comprises a plurality of first symmetrical slits 130a and second symmetrical slits 130b which are symmetrical about the first slit 110a. The first symmetrical slits 130a and second symmetrical slits are shaped as concave arcs when viewed along the axial length from the first slit 110a.

The first and second symmetrical slits 130a, 130b are each a circular arc in the axial direction. The midpoint of each first slit 110a extends further in the axial direction away from first slit 110a than the circumferential outer parts of the slits 110a that are located proximal the first edge 116 and the second edge 118.

The second surface 106 of the magnet body 102 also comprises one or more straight second surface slits 108a. The second surface 106 comprises symmetrical first and second slits 128a, 128b that are curved in the same manner as for first surface symmetrical slits 130a, 130b. The second surface slits may be offset from first surface slits.

Due to the concave shape of the first symmetrical slits 130a and the second symmetrical slits 130b, the density of slits is greater in the axially outer parts 114 of the magnet body 102 than in the an axially inner part 112. Due to the curved shape of the symmetrical slits 130a and 130b, eddy currents are disrupted in both the circumferential and axial directions. Providing symmetrical slits may increase the mechanical robustness of the magnet body 102 since any additional eddy currents or vibrations during operation are disrupted in the axial direction so that the magnet body 102 is balanced.

In examples, the curved symmetrical slits 130a, 130b, 128a, 128b may be replaced by v-shaped slits that are concave and extend across the circumferential width of the magnet body 108.

The magnet 100 is shown in Figs 3 to 9 as a simple block but, in examples, the top surface is circular. In examples, the magnet is arc shaped, with both the first and second surfaces being curved.

Features of any of the above examples may be combined with features of other examples. For example, the example shown in Fig. 3 may have fewer slits on the second surface. In examples, there may be provided slits at the ends in circumferential direction as well as a higher density of slits along the radial length of the magnet body. In examples, no slits may be present in the second surface of the magnet body. Other combinations of features are also envisaged.

In examples, the slits may be straight. In examples, the slits may be arc-shaped, v-shaped, wavy or any other suitable shape. In examples, various combinations of different shaped slits may be used.

Various aspects disclosed in the various examples may be used alone, in combination, or in a variety of arrangements not specifically discussed in the examples described in the foregoing and this disclosure is therefore not limited in its application to the details and arrangement of components set forth in the foregoing description or illustrated in the drawings. For example, aspects described in one example may be combined in any manner with aspects described in other examples. Although particular examples have been shown and described, it will be obvious to those skilled in the art that changes and modifications may be made without departing from the invention in its broader aspects. The scope of the following claims should not be limited by the examples set forth in the examples, but should be given the broadest reasonable interpretation consistent with the description as a whole.

## Claims

1. A magnet for a surface permanent magnet machine, the magnet comprising:
a magnet body having a first surface, wherein the first surface comprises an inner part and an outer part, wherein the outer part is axially outwards of the inner part in use,
wherein the first surface comprises a plurality of slits,
wherein a density of the slits is greater at the outer part than at the inner part.

2. The magnet of claim 1, wherein the first surface is an in-use radially outer surface.3.
The magnet of claim 1 or claim 2, wherein the inner part covers an axial mid-point of the magnet body.

3. The magnet of any preceding claim, wherein the outer part is closer to the in-use axial end of the magnet body.

4. The magnet of any preceding claim, wherein the outer part comprises two parts on opposing sides of the inner part.

5. The magnet of any preceding claim, comprising slits that extend in the circumferential direction.

6. The magnet of claim 5, wherein the slits are spaced along the in-use axial length of the magnet.

7. The magnet of claim 5 or claim 6, wherein spacing between the slits at the outer part of the first surface is smaller than the spacing between the slits at the inner part of the first surface.

8. The magnet of any preceding claim, comprising slits that extend in the axial direction.

9. The magnet of claim 8, wherein at least some of the slits that extend in the axial direction extend only in the outer part in the first surface.

10. The magnet of any preceding claim, wherein the magnet body comprises a second surface arranged opposite to the first surface, and wherein the second surface comprises a plurality of second surface slits.

11. The magnet of claim 10, wherein the first surface comprises more slits than the second surface.

12. The magnet of any preceding claim, comprising slits that extend at an angle in the first and/or second surface.

13. A surface permanent magnet machine comprising at least one of the magnets of any preceding claim.

14. The surface permanent magnet machine of claim 13, wherein the surface permanent magnet machine is a motor.

15. An aircraft comprising the surface permanent magnet machine of claim 13 or 14.
